# FASCICULE DE BREVET EUROPEEN

(11) **EP 3 876 330 B1**
(45) Date de publication et mention de la délivrance du brevet: **28.12.2022**
(21) Numéro de dépôt: 21159704.2
(22) Date de dépôt: 26.02.2021
(51) Int. Cl.: H01M 10/056, B01D 67/00, B01D 69/14, B01D 71/02, B01D 69/12, B01D 71/26, H01M 50/403, H01M 50/409, H01M 50/411, H01M 50/431, H01M 50/44, H01M 10/0525, H01M 50/414

(54) **PROCÉDÉ DE FABRICATION D'UNE MEMBRANE À ÉLECTROLYTE**
VERFAHREN ZUR HERSTELLUNG EINER ELEKTROLYT-MEMBRAN
METHOD FOR MANUFACTURING AN ELECTROLYTE MEMBRANE

(30) Priorité: 05.03.2020 FR 2002224
(43) Date de publication de la demande: 08.09.2021
(73) Titulaire: Commissariat à l'énergie atomique et aux énergies alternatives, 75015 Paris (FR); Centre National de la Recherche Scientifique, 75794 Paris Cedex 16 (FR)
(72) Inventeur: BELIME, Agathe, 38000 GRENOBLE (FR); BENWADIH, Mohamed, 38054 GRENOBLE CEDEX 09 (FR); RAMOS, Raphaël, 38054 GRENOBLE CEDEX 09 (FR); BERROD, Quentin, 38000 GRENOBLE (FR); ZANOTTI, Jean-Marc, 38042 GRENOBLE CEDEX 09 (FR)
(74) Mandataire: Brevalex

(56) Documents cités:
- WO-A1-2012/004317
- WO-A1-2016/070103
- WO-A1-2016/151142
- WO-A1-2019/108616
- WO-A2-2009/148959

## Description

### DOMAINE TECHNIQUE

La présente invention se rapporte au domaine général des membranes à électrolyte, en particulier pour des dispositifs électrochimiques.

L'invention concerne un procédé de fabrication d'une membrane à électrolyte.

L'invention concerne également une membrane à électrolyte ainsi obtenue, notamment à électrolyte liquide ionique ou à électrolyte polymère solide.

L'invention concerne également un dispositif électrochimique, par exemple un accumulateur à métal alcalin, comprenant cette membrane à électrolyte.

L'invention est particulièrement intéressante puisqu'elle permet d'obtenir une membrane à électrolyte ayant une bonne conductivité ionique.

L'invention trouve, par exemple, des applications dans le domaine des du stockage de l'énergie, et en particulier pour les véhicules hybrides ou électriques.

### ÉTAT DE LA TECHNIQUE ANTÉRIEURE

Actuellement, les accumulateurs de puissance de type lithium-ion font l'objet de nombreux efforts de recherche, en vue d'en améliorer les performances. En effet, pour certaines applications, par exemple pour le transport, les accumulateurs doivent pouvoir à la fois stocker une quantité importante d'énergie et la délivrer sur de courtes durées. Or, actuellement, ils offrent des densités d'énergie très élevées (150 Wh/kg) mais des puissances encore modestes (1-3 kW/kg).

Il n'existe actuellement pas de dispositif pouvant atteindre à la fois une forte puissance et une forte densité énergétique. Ceci est dû principalement à des facteurs cinétiques et/ou à une faible conductivité ionique au sein de l'électrolyte.

Par exemple, les électrolytes liquide ionique (notés LI) ont l'inconvénient de s'auto-organiser spontanément à l'échelle nanométrique, ce qui induit de grandes fluctuations de densité pouvant diminuer localement la conductivité ionique.

Une des voies d'amélioration pour améliorer la conductivité globale consiste donc à obtenir un effet de confinement de l'électrolyte dans un volume inférieur à la taille caractéristique des fluctuations spontanées. Ce confinement doit se faire au sein de pores nanométriques unidimensionnels (1D) ne montrant aucune tortuosité. Cet effet pourrait théoriquement permettre de changer l'ordre de grandeur de la puissance spécifique délivrée par ces dispositifs électrochimiques.

Par exemple, comme décrit dans le document WO 2016 /151142 A1 et l'article de Berrod et al. (« Ionic liquids confined in 1D CNT membranes: gigantic ionic conductivity », arXiv:1710.06020 (2017)), la réduction de dimensionnalité peut être assurée par le confinement de l'électrolyte au sein d'une membrane comprenant une matrice polymérique dans laquelle des nanotubes de carbone (NTC), forment des canaux à travers l'épaisseur de la membrane. Pour obtenir une telle membrane, on fait tout d'abord croître un tapis de NTC puis on remplit l'espace entre les NTC avec un matériau solide, par exemple un polymère organique. Avant cette étape de remplissage, pour éviter tout court-circuit, dans le cas de NTC mono-parois (« Single Wall ») les parois extérieures des NTC peuvent être rendus électriquement isolants par fluoration. Cette membrane présente à la fois une porosité nanométrique et une anisotropie macroscopique de par l'orientation moyenne des NTCs.

Il est ainsi possible d'obtenir un gain de conductivité ionique par la conjonction de plusieurs effets :
- le confinement extrême des molécules d'électrolyte, par exemple de liquide ionique, dans les NTC, induit des effets de frustration dans l'auto-organisation que possède normalement l'électrolyte lorsqu'il est en volume,
- l'absence de tortuosité et la très faible interaction entre les molécules de l'électrolyte et la paroi intérieure "lisse" des NTC semble favoriser un phénomène de glissement (i.e. un très faible coefficient de friction à l'interface NTC/électrolyte).

Les premiers résultats obtenus montrent un gain de conductivité ionique d'un facteur 55.

Cependant, même si de tels résultats sont particulièrement prometteurs, il subsiste aujourd'hui quelques limitations qui doivent être levées afin que de telles membranes puissent révéler leur réel potentiel :
- pour garantir un gain en puissance maximal, il est nécessaire de conserver un bon agencement des NTC dans la membrane (parallèles entre eux, perpendiculaires aux électrodes et sans tortuosité) pour optimiser le transport des espèces de l'électrolyte,
- une limitation sérieuse de l'utilisation des NTC comme séparateurs de batteries est la conductivité électronique des NTC qui peut mettre les électrodes en court-circuit et rendre la batterie inutilisable ; la fluoration qui consiste à greffer de manière covalente du fluor sur la paroi des NTC présente deux inconvénients majeurs : elle n'est efficace que pour les NTC monoparois (les parois internes des NTC multiparois pouvant toujours avoir un comportement métallique), et elle détruit localement l'hybridation sp2 des atomes de carbone constituant le NTC, ce qui peut modifier la forme et/ou les propriétés physico-chimiques des NTC,
- une élévation de température au niveau du séparateur, par exemple en cas de court-circuit, peut entrainer une inflammation spontanée de l'électrolyte.

### EXPOSÉ DE L'INVENTION

Un but de la présente invention est de remédier au moins en partie aux inconvénients de l'art antérieur et, plus particulièrement, de proposer un procédé de fabrication d'une membrane à électrolyte, isolante électrique que les NTC soir mono- ou multi-parois (ou les deux), présentant une bonne conduction ionique, pouvant procurer un gain significatif en puissance à un accumulateur, et de préférence évitant les risques de court-circuit.

Pour cela, la présente invention propose un procédé pour fabriquer une membrane à électrolyte pour dispositif électrochimique comprenant les étapes suivantes :
a) fournir un substrat recouvert d'un tapis de nanotubes de carbone, les nanotubes ayant une première extrémité et une deuxième extrémité, séparées par une partie centrale, la première extrémité des nanotubes de carbone étant fixée au substrat,
b) former une couche de maintien, en un premier matériau polymère, sur la deuxième extrémité des nanotubes de carbone, moyennant quoi la deuxième extrémité des nanotubes de carbone est recouverte et maintenue par la couche de maintien,
c) former, entre la couche de maintien et le substrat, une matrice polymérique en un deuxième matériau polymère, de manière à enrober au moins la partie centrale des nanotubes de carbone,
d) lorsque le premier matériau polymère n'est pas conducteur ionique et isolant électrique, retirer la couche de maintien puis recouvrir la deuxième extrémité des nanotubes de carbone par un élément conducteur ionique et isolant électrique,
e) retirer le substrat, moyennant quoi on obtient une membrane à électrolyte, ayant une première face principale et une deuxième face principale, les nanotubes de carbone formant des canaux au sein de la membrane à électrolyte, les canaux étant orientés perpendiculairement à la première surface et à la deuxième surface, et étant de préférence étant régulièrement espacés.

L'ordre des étapes peut être a), b), c), d) et e). L'ordre peut également être a), b), c), e) et d).

L'invention se distingue fondamentalement de l'art antérieur par la mise en œuvre d'une étape (étape b) permettant de fixer la deuxième extrémité des nanotubes de carbone dans une couche de maintien, avant de former la matrice polymérique.

Ainsi, lors de l'étape c), au cours de laquelle on forme la matrice polymérique, par exemple, par infiltration, dans l'espace inter-tubes, les forces capillaires entrant en jeu ne perturbent pas l'organisation des NTC : leur répartition reste identique à celle du tapis de nanotubes de carbone fourni à l'étape a). L'agencement des nanotubes de carbone est garanti puisque la première extrémité des nanotubes de carbone est fixée au substrat et que la deuxième extrémité des nanotubes de carbone est maintenue par la couche de maintien. La verticalité des nanotubes de carbone n'est pas perturbée. On n'observe pas d'agglomération des nanotubes de carbone sous la forme de faisceau. Leur orientation est perpendiculaire, ou sensiblement perpendiculaires aux faces principales de la membrane de manière à former des canaux dans l'épaisseur de la membrane, pour pouvoir conduire des espèces ioniques d'une face à l'autre de la membrane. La couche de maintien permet de conserver l'agencement des NTC lors de la formation de la matrice polymérique. L'espacement des nanotubes de carbone est, avantageusement, régulier.

La membrane ainsi obtenue est plus solide mécaniquement, ne présente pas de fissures, ce qui évite les fuites lors de son fonctionnement, en présence d'un électrolyte. De plus, comme les nanotubes de carbones forment des canaux droits au sein de la membrane, les propriétés de transport peuvent être améliorées jusqu'à un ordre de grandeur voire jusqu'à trois ordres de grandeur, et donc la puissance délivrée par les dispositifs électrochimiques utilisant de telles membranes, comme les accumulateurs au lithium, est significativement plus élevée.

Avantageusement, l'étape b) est réalisée selon les étapes successives suivantes :
- déposer sur un support une première solution contenant un premier solvant et le premier matériau polymère dissous ou les précurseurs du premier matériau polymère, et, avantageusement, évaporer une partie du solvant,
- positionner le support sur la deuxième extrémité des nanotubes de carbone, de manière à ce que la deuxième solution soit en contact avec la deuxième extrémité des nanotubes de carbone,
- évaporer le solvant et, éventuellement, polymériser les précurseurs du premier matériau polymère.

Selon une autre variante avantageuse, l'étape b) est réalisée sans solvant. Les précurseurs du premier matériau polymère, seuls ou en mélange avec un agent de réticulation thermosensible, peuvent être réticulés thermiquement en les chauffant au-dessus de la température de transition vitreuse (Tg) ou du point de fusion. Les précurseurs du premier matériau polymère peuvent également être mélangés, avec un agent de réticulation photosensible, et être réticulés au moyen d'un rayonnement photonique.

Avantageusement, le premier matériau polymère est un polymère électrolyte, un poly(liquide ionique) ou un ionogel.

Le tapis nanotubes de carbone (mono-parois et/ou multi-parois) est recouvert soit par la couche de maintien en premier matériau polymère soit par l'élément électriquement isolant, ajouté lors de l'étape d), ce qui permet de supprimer tout court-circuit. L'élément conducteur ionique et isolant électrique est, de préférence choisi parmi les poly(liquides ioniques), les polymères électrolytes (par exemple POE, PPO) et les ionogels.

Selon une première variante de réalisation, l'élément conducteur ionique et isolant électrique peut former une couche continue.

Selon une deuxième variante de réalisation, l'élément conducteur ionique et isolant électrique peut être greffé sur la deuxième extrémité des NTC. Le greffage, par rapport à une fluoration, minimise les zones où l'hybridation sp2 du carbone est perturbée. L'intégrité structurale des nanotubes de carbone est conservée. De plus, le greffage est efficace pour rendre isolant les NTC qu'ils soient mono-parois ou multi-parois. La mise en œuvre de l'étape de greffage après l'étape c) est facilitée grâce à la matrice polymérique qui maintient mécaniquement au moins la partie centrale des nanotubes de carbone lors de cette étape.

Avantageusement, le procédé comporte une étape additionnelle entre l'étape b) et l'étape c) au cours de laquelle on forme une couche de sécurité en un troisième matériau polymère sur le substrat, moyennant quoi la couche de sécurité entoure la première extrémité des nanotubes de carbone, le troisième matériau étant, par exemple, en polyéthylène, en polyoléfine, en poly(acide acrylique), en polyméthacrylonitrile ou en PMMA éventuellement syndiotactique.

De préférence, le deuxième matériau polymère est isolant électrique. Selon différentes variantes de réalisation, le deuxième matériau polymère peut être choisi parmi le PDMS, le polystyrène, les polymères époxyde, le PMMA éventuellement syndiotactique ou en un de leurs copolymères, les polymères électrolytes, les poly(liquides ioniques), les ionogels, les polyoléfines, un poly(acide acrylique) et les polyméthacrylonitriles.

Le deuxième matériau polymère peut être identique au premier matériau polymère, ou identique au troisième matériau polymère.

L'invention concerne également une membrane à électrolyte pour dispositif électrochimique, ayant une première face principale et une deuxième face principale, la membrane à électrolyte comprenant :
- un tapis de nanotubes de carbone ayant une première extrémité et une deuxième extrémité, séparées par une partie centrale, les nanotubes de carbone étant disposés de manière à former des canaux orientés perpendiculairement à la première face et à la deuxième face, les nanotubes de carbone étant régulièrement espacés,
la deuxième extrémité des nanotubes de carbone étant recouverte par une couche de maintien en premier matériau polymère conducteur ionique et isolant électrique, ou par un élément conducteur ionique et isolant électrique.
- Une matrice polymérique en un deuxième matériau polymère séparant les nanotubes de carbone les uns des autres, la matrice polymérique enrobant au moins la partie centrale des nanotubes de carbone.

Avantageusement, le premier matériau polymère est choisi parmi les poly(liquides ioniques), les polymères électrolytes et les ionogels.

Avantageusement, l'élément conducteur ionique et isolant électrique est choisi parmi les poly(liquides ioniques), les polymères électrolytes (tel que le POE), l'oxyde de propylène (ou PPO pour « Poly Propylene Oxide »), les polymères anioniques et/ou les polymères multi-blocs à base de monomères des polymères précités.

Selon une première variante de réalisation, l'élément conducteur ionique et isolant électrique forme une couche continue sur la deuxième extrémité des nanotubes de carbone.

Selon une autre variante de réalisation, l'élément conducteur ionique et isolant électrique est greffé sur la deuxième extrémité des nanotubes de carbone.

Avantageusement, la membrane comprend, en outre, une couche de sécurité en un troisième matériau polymère, entourant la première extrémité des nanotubes de carbone, le troisième matériau polymère étant choisi parmi le polyéthylène, les polyoléfines, les poly(acide acrylique), le polyméthacrylonitrile et le PMMA éventuellement syndiotactique. La couche de sécurité permet de bloquer la conductivité ionique en cas de surchauffe et ainsi éviter un emballement thermique, voire une explosion. Cette couche de sécurité fonctionne de manière passive avec fermeture des pores de la membrane, au niveau de la première extrémité des nanotubes de carbone, au-delà d'une température critique. Par ailleurs, en raison de la forte anisotropie de conduction thermique des membranes à NTC (forte conduction dans le sens des NTC, et faible conduction dans le plan orthogonal), il est possible de fermer les pores uniquement au niveau des points chauds, et éventuellement de façon réversible, minimisant ainsi la dégradation thermique des batteries. Au-delà d'une température seuil le polymère de la couche de sécurité gonfle, bouche les pores des NTC (bloquant la diffusion des ions lithium) et ainsi, lors d'une utilisation dans une batterie, isole les deux électrodes, disposées de part et d'autre de la membrane.

De préférence, le deuxième matériau polymère est isolant électrique. Selon différentes variantes de réalisation, le deuxième matériau polymère peut être choisi parmi le PDMS, le polystyrène, les polymères époxyde, le PMMA éventuellement syndiotactique ou en un de leurs copolymères, les polymères électrolytes, les poly(liquides ioniques), les polymères anioniques et/ou les polymères multi-blocs à base de monomères de polymères précités, les ionogels, les polyoléfines, un poly(acide acrylique) et les polyméthacrylonitriles.

Le deuxième matériau polymère peut être identique au premier matériau polymère, ou identique au troisième matériau polymère.

La membrane présente de nombreux avantages :
- une bonne conductivité ionique (bonne diffusion des ions à l'intérieur des pores de NTC puisque ceux-ci ne présente pas de tortuosité),
- un gain d'un ou de plusieurs ordres de grandeur sur les propriétés de transport,
- une bonne isolation électrique (pas de court-circuit lorsque la membrane est disposée en configuration dite « sandwich » entre deux électrodes),
- une sécurité passive puisque la conductivité ionique des séparateurs de batteries est bloquée voire réduite en cas de surchauffe et d'emballement thermique.

L'invention concerne également un dispositif électrochimique, tel qu'un accumulateur au lithium, comprenant une membrane à électrolyte, telle que définie précédemment, la membrane à électrolyte étant disposée entre une première électrode et une seconde électrode, les nanotubes de carbone étant rempli par un électrolyte.

Les dispositifs électrochimiques, comme les accumulateurs au lithium, utilisant de telles membranes présentent une gamme puissance/énergie très supérieure à celle des autres filières de stockage d'énergie bas carbone, comme par exemple les piles à combustible.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
Les figures 1a, 1b et 1c représentent, de manière schématique, en coupe et de profil, différentes étapes d'un procédé de fabrication d'une membrane à électrolyte selon un premier mode de réalisation particulier de l'invention.
Les figures 2a, 2b et 2c représentent, de manière schématique, en coupe et de profil, différentes étapes d'un procédé de fabrication d'une membrane à électrolyte selon un deuxième mode de réalisation particulier de l'invention.
Les figures 3a, 3b, 3c et 3d représentent, de manière schématique, en coupe et de profil, différentes étapes d'un procédé de fabrication d'une membrane à électrolyte selon un troisième mode de réalisation particulier de l'invention.
Les figures 4a, 4b, 4c, 4d, 4e et 4f représentent, de manière schématique, en coupe et de profil, différentes étapes d'un procédé de fabrication d'une membrane à électrolyte selon un quatrième mode de réalisation particulier de l'invention.
Les figures 5a, 5b, 5c et 5d représentent, de manière schématique, en coupe et de profil, différentes étapes d'un procédé de fabrication d'une membrane à électrolyte selon un cinquième mode de réalisation particulier de l'invention.
Les figures 6a, 6b, 6c, 6d, 6e et 6f représentent, de manière schématique, en coupe et de profil, différentes étapes d'un procédé de fabrication d'une membrane à électrolyte selon un sixième mode de réalisation particulier de l'invention.
La figure 7 représente, de manière schématique, en 3 dimensions, un assemblage membrane-électrodes, pour dispositif électrochimique selon un mode de réalisation particulier de l'invention.
Les figures 8a, 8b et 8c représentent, de manière schématique, en coupe et de profil, des membranes à électrolyte, en cas de surchauffe, selon différents modes de réalisation particuliers de l'invention.
Les figures 9a et 9b sont des clichés obtenus par microscopie électronique à balayage, représentant des tapis de nanotubes de carbone maintenu dans une couche de PMMA.
La figure 10 est un cliché photographique représentant une membrane composite NTC-Polystyrène, obtenue selon un procédé de l'art antérieur (à gauche) et une membrane composite NTC-Polystyrène obtenue selon un mode de réalisation particulier du procédé de l'invention (à droite).

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

Par la suite, même si la description fait référence à une membrane à électrolyte 100 pour un accumulateur au lithium, l'invention est transposable à tout autre accumulateur à métal alcalin.

L'invention trouve des applications notamment pour les batteries dans des véhicules électriques ou hybrides, les batteries pour l'alimentation d'appareils électroniques portatifs tels que des ordinateurs, téléphones, montres, consoles de jeux portables, des lecteurs vidéo/audio, des lecteurs MP3, MP4 etc. ; les batteries pour l'alimentation d'appareils électroniques embarqués par exemple sur des aéronefs; les batteries pour le stockage de l'énergie produite par des dispositifs générateur d'électricité intermittents, comme les éoliennes et les panneaux solaires.

A titre illustratif et non limitatif, on va maintenant décrire différentes variantes du procédé de fabrication d'une membrane à électrolyte.

Chaque procédé nécessite au moins les étapes suivantes :
- fournir un substrat 10 recouvert par un tapis de nanotubes de carbone (NTC ou CNT pour « Carbon NanoTubes »), les nanotubes de carbone 50 ayant une première extrémité et une deuxième extrémité, séparées par une partie centrale ; la première extrémité des nanotubes de carbone 50 étant fixée au substrat 10,
- former une couche de maintien 110, en un premier matériau polymère, sur la deuxième extrémité des nanotubes de carbone 50, moyennant quoi la deuxième extrémité des nanotubes de carbone 50 est recouverte et maintenue par la couche de maintien 110,
- former, entre la couche de maintien 110 et le substrat 10, une matrice polymérique 120 en un deuxième matériau polymère, différent du premier matériau polymère, de manière à enrober au moins la partie centrale des nanotubes de carbone 50,
- retirer le substrat 10.

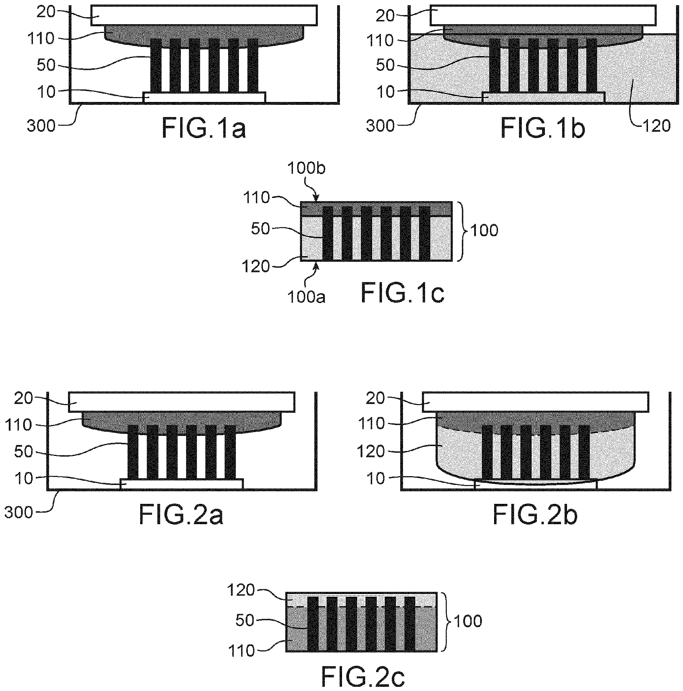

Selon un premier mode de réalisation de l'invention, représenté sur les figures la à 1, le procédé comprend les étapes suivantes :
a) fournir un substrat 10 recouvert d'un tapis de nanotubes de carbone 50,
b) former une couche de maintien 110, en un premier matériau polymère, conducteur ionique et isolant électrique, sur la deuxième extrémité des nanotubes de carbone 50 (figure 1a),
c) former, entre la couche de maintien 110 et le substrat 10, une matrice polymérique en un matériau polymère, de manière à enrober les NTC la partie centrale des nanotubes de carbone 50, la matrice polymérique recouvrant les NTC jusqu'à leur première extrémité (figure 1b),
e) retirer le substrat 10, moyennant quoi on obtient une membrane à électrolyte 100 (figure 1c).

Selon un deuxième mode de réalisation représenté sur les figures 2a à 2c, le procédé de fabrication de la membrane à électrolyte 100 comprend les étapes suivantes :
a) fournir un substrat 10 recouvert d'un tapis de nanotubes de carbone 50,
b) former une couche de maintien 110, en un premier matériau polymère, conducteur ionique et isolant électrique, sur la deuxième extrémité des nanotubes de carbone 50 (figure 2a),
c) former, entre la couche de maintien 110 et le substrat 10, une matrice polymérique en un deuxième matériau polymère, conducteur ionique et isolant électrique, de manière à enrober les nanotubes de carbone 50 depuis la partie centrale jusqu'à la première extrémité, le premier matériau polymère et le deuxième matériau polymère pouvant être identiques (figure 2b),
e) retirer le substrat 10, moyennant quoi on obtient une membrane à électrolyte 100 (figure 2c).

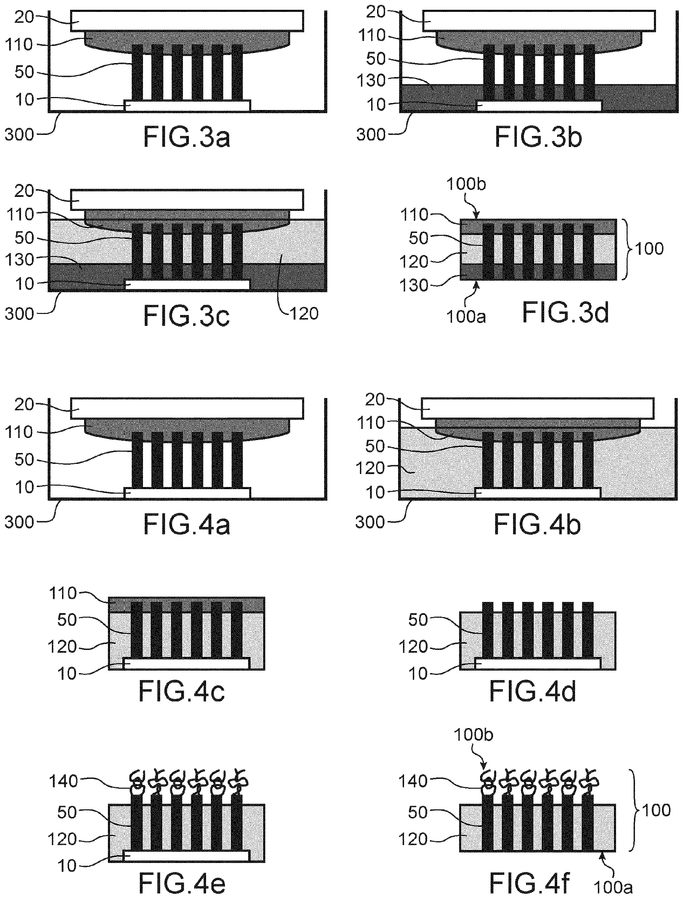

Selon un troisième mode de réalisation représenté sur les figures 3a à 3d, le procédé de la membrane à électrolyte 100 comprend les étapes suivantes :
a) fournir un substrat 10 recouvert d'un tapis de nanotubes de carbone 50,
b) former une couche de maintien 110, en un premier matériau polymère, conducteur ionique et isolant électrique, sur la deuxième extrémité des nanotubes de carbone 50 (figure 3a),
   - former une couche de sécurité 130 en un troisième matériau polymère sur le substrat, de manière à ce que la première extrémité des nanotubes de carbone 50 soit enrobée dans la couche de sécurité 130 (figure 3b),
c) former, entre la couche de maintien 110 et le substrat 10, et plus particulièrement entre la couche de sécurité 130 et la couche de maintien 110, une matrice polymérique 120 en un deuxième matériau polymère, de manière à enrober la partie centrale des nanotubes de carbone 50 (figure 3c),
e) retirer le substrat 10 (figure 3d).

Selon un quatrième mode de réalisation, représenté sur les figures 4a à 4f, le procédé de fabrication de la membrane à électrolyte 100 comprend les étapes suivantes :
a) fournir un substrat 10 recouvert d'un tapis de nanotubes de carbone 50,
b) former une couche de maintien 110, en un premier matériau polymère, sur la deuxième extrémité des nanotubes de carbone 50 (figure 4a),
c) former, entre la couche de maintien 110 et le substrat 10, une matrice polymérique 120 en un deuxième matériau polymère, de manière à enrober les nanotubes de carbone 50 depuis la partie centrale jusqu'à la première extrémité (figure 4b),
d) retirer la couche de maintien 110 (figure 4d) puis recouvrir la deuxième extrémité des nanotubes de carbone par un élément 140 conducteur ionique et isolant électrique (figure 4e),
e) retirer le substrat 10 (figure 4f).

L'étape e) peut être réalisée antérieurement ou postérieurement à l'étape d).

Selon une première variante de réalisation non représentée, l'élément 140 conducteur ionique et isolant électrique peut être ajouté sous la forme d'une couche continue.

Selon une autre variante de réalisation représentée sur la figure 4e, l'élément 140 conducteur ionique et isolant électrique est greffé sur le deuxième matériau polymère.

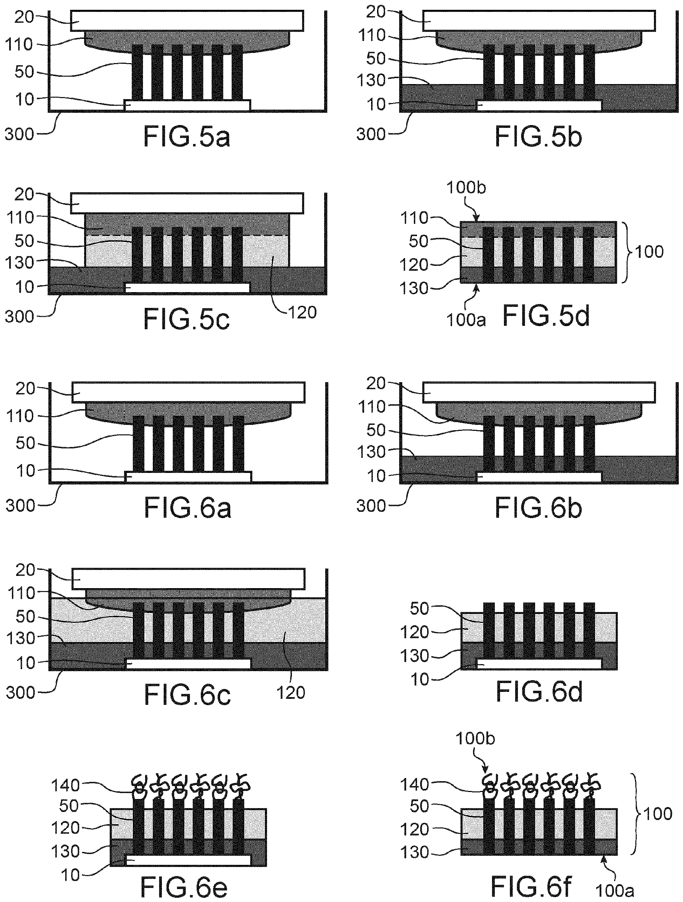

Selon un cinquième mode de réalisation, représenté sur les figures 5a à 5d, le procédé de fabrication de la membrane à électrolyte 100 comprend les étapes suivantes :
a) fournir un substrat 10 recouvert d'un tapis de nanotubes de carbone 50,
b) former une couche de maintien 110, en un premier matériau polymère, conducteur ionique et isolant électrique, sur la deuxième extrémité des nanotubes de carbone 50 (figure 5a),
   - former une couche de sécurité 130 en un troisième matériau polymère sur le substrat, de manière à ce que la première extrémité des nanotubes de carbone soit enrobée dans la couche de sécurité 130 (figure 5b),
c) former, entre la couche de maintien 110 et le substrat 50, une matrice polymérique 120 en un deuxième matériau polymère, conducteur ionique et isolant électrique, de manière à enrober au moins la partie centrale des nanotubes de carbone 50, le premier matériau polymère et le deuxième matériau polymère pouvant être identiques (figure 5c),
e) retirer le substrat 10 (figure 5d).

Selon un sixième mode de réalisation, représenté sur les figures 6a à 6f, le procédé de fabrication de la membrane à électrolyte 100 comprend les étapes suivantes :
a) fournir un substrat 10 recouvert d'un tapis de nanotubes de carbone 50,
b) former une couche de maintien 110, en un premier matériau polymère, sur la deuxième extrémité des nanotubes de carbone 50 (figure 6a),
   - former une couche de sécurité 130 en un troisième matériau polymère sur le substrat 10, de manière à ce que la première extrémité des nanotubes de carbone 50 soit enrobée dans la couche de sécurité 130 (figure 6b),
c) former, entre la couche de maintien 110 et le substrat 10, et plus particulièrement entre la couche de maintien 110 et la couche de sécurité 130, une matrice polymérique 120 en un deuxième matériau polymère, de manière à enrober au moins la partie centrale des nanotubes de carbone 50 (figure 6c),
d) retirer la couche de maintien 110 (figure 6d) puis recouvrir la deuxième extrémité des nanotubes de carbone 50 par un élément 140 conducteur ionique et isolant électrique soit sous forme d'une couche continue soit greffé sur la deuxième extrémité des nanotubes de carbone (figure 6e),
e) retirer le substrat (figure f).

L'étape e) peut être réalisée antérieurement ou postérieurement à l'étape d).

Dans ces différents modes de réalisation décrit ci-dessus, le substrat 10 fourni à l'étape a) est recouvert par un tapis de nanotubes de carbone 50 (NTC). Les nanotubes 50 sont parallèles les uns aux autres, de préférence, régulièrement espacés, et fixés au substrat 10 par une première extrémité.

Le tapis de NTC 50 peut être synthétisé par dépôt chimique en phase vapeur (ou CVD pour « Chemical Vapor Deposition »). La croissance de tapis de nanotubes de carbone par CVD peut être réalisée sur un substrat recouvert par une couche d'oxyde métallique, elle-même recouverte par une couche de catalyseur. Le démouillage du catalyseur métallique aboutit à la formation de nanoparticules métalliques qui enclenchent aux alentours de 500°C, la dissociation du gaz précurseur carboné à leur surface, permettant la formation et la croissance des NTC.

Le substrat 10 de croissance peut être une plaquette (« wafer ») de silicium, ou un feuillard d'acier inoxydable ou d'aluminium.

La couche d'oxyde métallique est, par exemple, une couche d'alumine. Elle peut être déposée par un procédé d'ALD, par pulvérisation cathodique, ou par un procédé de pulvérisation par faisceau ionique (« *Ion Beam Sputtering* » ou *IBS* en langue anglaise).

Le catalyseur de croissance des nanotubes de carbone peut être choisi parmi le fer, le nickel, le cobalt, et leurs alliages.

Le catalyseur se présente généralement sous la forme d'une couche par exemple d'une épaisseur de 0,1 à 3 nm.

A titre illustratif, on choisira une plaquette de silicium recouverte d'une couche mince d'alumine, sur laquelle est déposée une couche nanométrique de fer.

A l'issue de l'étape de croissance, la première extrémité des NTC (le pied) est fixée au substrat. La deuxième extrémité des NTC (la tête) est bouchée. La deuxième extrémité des NTC est, de préférence, ouverte par traitement thermique ou attaque plasma ou ablation laser.

La densité des NTC est, par exemple, de 10⁹ à 10¹³ cm⁻², notamment de l'ordre de 3.10¹¹ NTC/cm². Les NTC ont une longueur, par exemple de 1µm à 500µm, de préférence de 10µm à 200µm, par exemple de 100µm. Le diamètre interne des NTC va, par exemple, de 1 à 100 nm, de préférence de 1 à 20 nm, de préférence encore de 3 à 5 nm.

Les nanotubes de carbone 50 peuvent être choisis parmi les nanotubes de carbone mono-paroi et/ou les nanotubes de carbone multi-parois.

Lors de l'étape b), on forme la couche de maintien 110 en un premier matériau polymère.

La couche de maintien 110 est, de préférence, formée en réalisant les étapes suivantes :
- déposer sur un support 20 une solution comprenant soit un solvant et le premier matériau polymère dissout soit le solvant, les précurseurs du premier matériau polymère, et un initiateur de polymérisation, par exemple, un photo-initiateur, de manière à former une fine couche de solution,
- éventuellement, laisser une partie du solvant s'évaporer naturellement ou chauffer le substrat pour faire évaporer une partie du solvant, moyennant quoi on obtient une couche visqueuse,
- reporter le support 20 sur la deuxième extrémité des nanotubes de carbone 50, de manière à mettre en contact la deuxième extrémité des NTC avec la solution ou avec la couche visqueuse,
- faire évaporer le solvant et, éventuellement, polymériser les précurseurs du polymère, par exemple sous rayonnement ultra-violet (UV).

Par précurseur du polymère, on entend les monomères et/ou les oligomères et/ou les pré-polymères menant à la formation du polymère.

Selon une autre variante avantageuse, l'étape b) est réalisée sans solvant lorsque les précurseurs du premier matériau polymère sont liquides. Les précurseurs du premier matériau polymère, seuls ou en mélange avec un agent de réticulation thermosensible, peuvent être réticulés thermiquement en les chauffant au-dessus de la température de transition vitreuse (Tg) ou du point de fusion. Les précurseurs du premier matériau polymère peuvent également être mélangés, avec un agent de réticulation photosensible, et être réticulés au moyen d'un rayonnement photonique. Selon cette variante avantageuse de réalisation, le premier matériau polymère est, par exemple, le PDMS.

Le support 20 peut être une plaque solide, par exemple en verre. De préférence, on choisira un support transparent aux longueurs d'onde du rayonnement photonique utilisé pour amorcer la polymérisation.

La couche de maintien 110 a, par exemple, une épaisseur de quelques nm à quelques µm.

Lorsque la couche de maintien 110 est conservée à l'issue du procédé, le premier matériau polymère est conducteur ionique et isolant électrique. Il est, de préférence, choisis parmi les poly(liquides ioniques), les polymères électrolytes (par exemple POE, PPO et polyanions) et les ionogels.

Par POE (« PEO » en anglais), on entend les polymères à base de Poly(Oxyde d'Éthylène) répondant à la formule [CH₂-CH₂-O]ₙ où la valeur de n est, par exemple, d'environ 3000.

Par poly(liquides ioniques) (ou PILs pour « poly(ionic liquid)s ») on entend des composés liquide ioniques dotés de fonctions polymérisables.

Par ionogel, on entend un gel conducteur ionique sous forme solide.

Lorsque la couche de maintien est retirée à l'issue du procédé, un large choix de matériaux polymère est envisageable pour former cette couche. Celle-ci peut être, par exemple, en PDMS, PMMA ou en un de leurs copolymères.

La couche de maintien 110 peut être retirée par décollement, dissolution, décomposition thermique ou abrasion mécanique ou ablation laser (étape d).

Après le retrait de la couche de maintien 110, la première extrémité des NTC est recouverte par un élément 140 conducteur ionique et isolant électrique choisi de façon à isoler électriquement la membrane, et assurer la conduction ionique. De préférence, l'élément 140 est choisi parmi les (poly(liquides ioniques), le POE, le PPO et les polymères électrolytes.

L'élément 140 peut être sous la forme d'une couche continue ou être formé de polymère greffé sur la deuxième extrémité des NTC 50.

La couche continue peut être formée, par exemple, par dépôt d'une solution contenant un polymère dissous ou les précurseurs du polymère dissous ou par dépôt du polymère fondu. Les techniques de dépôt sont, par exemple, la coulée (« casting »), le dépôt à la tournette (« spin-coating ») ou l'électrofilage (« electro-spinning »).

Selon une variante de réalisation, la première extrémité des NTC 50 est également libérée, par retrait d'une partie de la matrice polymérique, puis recouverte par un polymère isolant électrique et conducteur ionique. Les deux extrémités des NTC peuvent être recouvertes par des polymères identiques ou différents.

Certains des différents modes de réalisation précédemment décrits comportent une étape au cours de laquelle on forme une couche de sécurité 130, dite passive, sur le substrat 10 permettant d'entourer la première extrémité des nanotubes de carbone avec un troisième matériau polymère. Le troisième matériau polymère est choisi de façon à ce que ses chaînes polymères adoptent une conformation étendue (dans la suite on parlera de « gonflement » du polymère) au-dessus d'une température seuil (par exemple comprise entre 100 et 150°C). La température seuil correspond, avantageusement, à la température à laquelle un élément du séparateur pourrait entrer en combustion ou en surchauffe. Ainsi, en cas d'échauffement de la batterie, le troisième matériau polymère gonfle et déborde de l'espace inter-tube pour créer une couche à la fois isolante électrique et isolante ionique recouvrant la deuxième extrémité des NTC. Le troisième matériau polymère peut comprendre, et de préférence, être constitué d'un polymère à bas point de fusion (par exemple le polyéthylène, T_{fus} ^{∼} 85 - 140 °C), ou à haute température de transition vitreuse T_{g} (par exemple, 110 - 120°C, poly(acide acrylique), polyméthacrylonitrile et PMMA syndiotactique. Le gonflement peut être réversible, c'est-à-dire que lorsque la température redescend en-dessous d'une certaine température, pouvant être identique ou différente de la température seuil, le polymère retrouve sa conformation initiale.

Lors de l'étape c), on forme, entre la couche de maintien 110 et le substrat 10 (ou selon les modes de réalisation entre la couche de maintien 110 et la couche de sécurité 130), une matrice polymérique 120 en un deuxième matériau polymère, de manière à enrober au moins la partie centrale des nanotubes de carbone 50. Selon les modes de réalisation, la matrice polymérique 120 peut enrober uniquement la partie centrale des nanotubes de carbone ou enrober les nanotubes de carbone 50 depuis leur partie centrale jusqu'à leur première extrémité.

L'étape c) pour former la matrice polymérique 120 peut être réalisée :
- soit en dissolvant le polymère dans un solvant pour former une solution du polymère organique, en remplissant totalement l'espace entre les nanotubes de carbone 50 avec la solution du polymère organique et en évaporant le solvant,
- soit en chauffant le polymère organique en l'absence de solvant au-dessus de sa température de transition vitreuse (Tg) ou de son point de fusion pour le rendre fluide, et en laissant le polymère fluide s'absorber dans l'espace entre les nanotubes de carbone,
- soit en remplissant l'espace entre les nanotubes de carbone par un mélange comprenant les précurseurs du polymère, et un ou plusieurs amorceur(s) de radicaux libres photosensible et/ou thermo sensible(s) ; puis en réticulant ledit mélange thermiquement ou au moyen d'un rayonnement photonique.

Cette étape peut avantageusement être assistée par une mise sous vide pour faciliter/accélérer l'infiltration du deuxième polymère.

Pour réaliser cette étape, on utilisera, avantageusement, un moule 300 permettant de couler facilement la matrice polymérique 120.

Selon une variante particulière de réalisation, le deuxième matériau polymère peut être identique au premier matériau polymère.

Selon une autre variante particulière de réalisation, la fonction de sécurité peut être assurée par la matrice polymérique 120. La matrice polymérique est alors en un des matériaux précités pour le troisième matériau polymère.

Selon une variante particulière de réalisation, le deuxième matériau polymère est, par exemple, choisi parmi le polydiméthylsiloxane (PDMS), le polystyrène, les polymères époxyde, le poly(méthacrylate de méthyle) (PMMA) et un de leurs copolymères. Le deuxième matériau polymère peut être choisi de manière à conférer, par exemple, des propriétés de flexibilité à la membrane.

Finalement, lors de l'étape e), on retire le substrat 10 pour libérer la membrane. L'ouverture des NTC 50 au niveau de la première extrémité peut être réalisée, si besoin, par abrasion mécanique et attaque plasma ou ablation laser.

La membrane à électrolyte 100 composite ainsi obtenue comprend une première face principale 100a et une deuxième face principale 100b séparées par une épaisseur dans laquelle :
- les nanotubes de carbone, définissent des pores ou canaux orientés dans le sens de l'épaisseur de la membrane, tous parallèles ou sensiblement parallèle les uns aux autres, et tous perpendiculaires ou sensiblement perpendiculaires à la première face principale 100a et à la deuxième face principale 100b de la membrane 100, les nanotubes de carbone 50 étant de préférence régulièrement espacés,
- la deuxième extrémité des nanotubes de carbone 50 étant recouverte par un matériau polymère conducteur ionique et isolant électrique,
- une matrice polymérique 120 en un matériau polymère, de préférence isolant électrique, séparant les nanotubes de carbone 50 les uns des autres, la matrice polymérique 120 enrobant au moins la partie centrale des nanotubes de carbone,
- éventuellement, une couche de sécurité 130 en un troisième matériau polymère entourant, la première extrémité des nanotubes de carbone.

Avantageusement, la première face principale 100a et la deuxième face principale 100b sont planes et parallèles, la membrane est une membrane planaire.

Par sensiblement parallèles, on entend généralement que les nanotubes de carbone, et les pores ou canaux, présentent une faible mosaïcité d'orientation caractérisée par un paramètre d'orientation de Herman supérieur à 0,3 et de préférence supérieur à 0,5.

La première extrémité des NTC peut être située au niveau de la première face principale 100a, en delà de la première face principale 100a (autrement dit, elle peut émerger de la première face principale 100a) ou en deçà de la première face principale 100a (autrement dit, elle ne dépasse pas de la première face principale 100a).

La deuxième extrémité des NTC est disposée en deçà de la deuxième face principale 100b. Les NTC ne peuvent pas dépasser de la deuxième face ou ne peuvent pas être au même niveau que la deuxième face. La deuxième extrémité est à l'intérieur de la membrane 100, et plus particulièrement elle est située dans la couche de maintien 110 ou dans l'élément 140. Les nanotubes forment des canaux non émergeants au niveau de la deuxième face 100b. Ils sont recouverts par un polymère conducteur ionique et isolant électrique, permettant d'éviter les courts-circuits lors du fonctionnement dans un dispositif électrochimique.

Plus particulièrement, selon le premier mode de réalisation du procédé, la membrane 100 obtenue comprend depuis la deuxième face 100b vers la première face 100a (figure 1c) :
- la couche de maintien 110, en un premier matériau polymère, conducteur ionique et isolant électrique, enrobant et recouvrant la deuxième extrémité des NTC,
- la matrice polymérique 120 en un deuxième matériau polymère enrobant les NTC depuis la partie centrale des nanotubes de carbone 50 jusqu'à leur première extrémité.

Selon le deuxième mode de réalisation du procédé, la membrane 100 obtenue comprend depuis la deuxième face 100b vers la première face 100a (figure 2c) :
- la couche de maintien 110, en un premier matériau polymère, conducteur ionique et isolant électrique, enrobant et recouvrant la deuxième extrémité des NTC,
- la matrice polymérique en un deuxième matériau polymère, conducteur ionique et isolant électrique, enrobant les NTC depuis la partie centrale des nanotubes de carbone 50 jusqu'à leur première extrémité.

Avantageusement, le premier matériau et le deuxième matériau sont identiques de manière à former un bloc polymère en un même matériau dont l'épaisseur est supérieure à celle des NTC 50.

Selon le troisième mode de réalisation du procédé, la membrane 100 obtenue comprend depuis la deuxième face 100b vers la première face 100a (figure 3d) :
- la couche de maintien 110, en un premier matériau polymère, conducteur ionique et isolant électrique, enrobant et recouvrant la deuxième extrémité des NTC,
- la matrice polymérique 120, enrobant la partie centrale des nanotubes de carbone 50,
- la couche de sécurité 130, enrobant la première extrémité des nanotubes de carbone 50.

Selon le quatrième mode de réalisation du procédé, la membrane 100 obtenue comprend depuis la deuxième face 100b vers la première face 100a (figure 4f) :
- un élément 140 conducteur ionique et isolant électrique, recouvrant la première extrémité des NTC, l'élément 140 pouvant former une couche continue ou être formé de polymères greffés sur la deuxième extrémité des nanotubes de carbone,
- la matrice polymérique en un deuxième matériau polymère, enrobant les NTC depuis la partie centrale des nanotubes de carbone 50 jusqu'à leur première extrémité,
- un élément conducteur ionique et isolant électrique, recouvrant la deuxième extrémité des nanotubes de carbone 50.

Selon le cinquième mode de réalisation du procédé, la membrane 100 obtenue comprend depuis la deuxième face 100b vers la première face 100a (figure 5d) :
- la couche de maintien 110, en un premier matériau polymère, conducteur ionique et isolant électrique, enrobant et recouvrant la deuxième extrémité des NTC,
- la matrice polymérique 120 en un deuxième matériau polymère, conducteur ionique et isolant électrique, de préférence identique au premier matériau polymère, enrobant la partie centrale des nanotubes de carbone 50,
- la couche de sécurité 130 en un troisième matériau polymère entourant la première extrémité des NTC 50, jouant le rôle de sécurité en cas d'emballement thermique.

Selon le sixième mode de réalisation du procédé, la membrane 100 obtenue comprend depuis la deuxième face 100b vers la première face 100a (figure 6e) :
- un élément 140 conducteur ionique et isolant électrique, recouvrant la première extrémité des NTC, l'élément 140 pouvant former une couche continue ou être formé de polymères greffés sur la deuxième extrémité des nanotubes de carbone,
- la matrice polymérique 120 un deuxième matériau polymère entourant la partie centrale des nanotubes de carbone 50,
- un troisième polymère, entourant la première extrémité des NTC 50, jouant le rôle de sécurité en cas d'emballement thermique.

De telles membranes 100 de NTC 50 peuvent être assemblées dans une batterie de type « tout solide », présentant une conductivité ionique élevée et, éventuellement, plus sûre (électrolyte ininflammables).

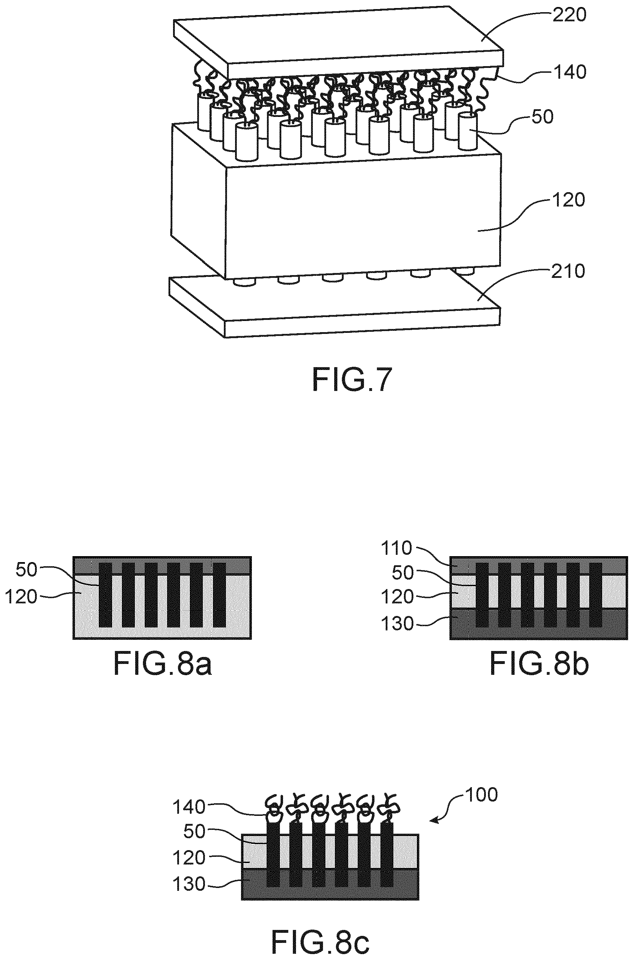

La figure 7 représente, par exemple, un assemblage membrane électrode comprenant une membrane à électrolyte 100 disposée entre deux électrodes 210, 220.

Les nanotubes de carbone sont remplis par un électrolyte. Le confinement de l'électrolyte à l'intérieur des NTC est obtenu par simple capillarité, sans qu'il ne pénètre dans le deuxième matériau polymère et/ou troisième matériau polymère de la membrane 100. Les ions de l'électrolyte peuvent ainsi transiter d'une électrode à l'autre grâce aux canaux formés par les nanotubes 50.

Selon une première alternative, l'électrolyte peut comprendre, ou être constitué d'un liquide ionique ou d'un mélange de liquide ionique.

Selon une autre alternative, l'électrolyte est un polymère organique, par exemple choisi parmi les polymères cristallins, semi-cristallins, liquides ou amorphes. Par exemple, le polymère est homopolymère ou un copolymère d'oxyde d'éthylène et de leurs dérivés. On pourra également choisir un oligomère de faible masse moléculaire. Par exemple, il peut s'agir d'un POE ayant une masse moléculaire inférieure ou égale à 500g/mol.

L'électrolyte peut comprendre un sel conducteur ionique. Le sel conducteur ionique peut être un sel d'un métal alcalin ou un sel d'un métal alcalinoterreux. Le sel d'un métal alcalin peut être par exemple un sel de lithium ou un sel de sodium. A titre illustratif, le sel de lithium peut être choisi par exemple parmi LiAsF₆, LiClO₄, LiBF₄, LiPF₆, LiBOB, LiODBF, LiB(C₆H₅), LiR_{F}SO₃ par exemple LiCF₃SO₃, LiCH₃SO₃, LiN(R_{F}SO₂)₂ par exemple LiN(CF₃SO₂)₂ (LiTFSI) ou LiN(C₂F₅SO₂)₂ (LiBETI), LiC(R_{F}SO₂)₃, par exemple LiC(CF₃SO₂)₃ (LiTFSM), dans lesquels R_{F} est choisi parmi un atome de fluor et un groupement perfluoroalkyle comprenant de 1 à 8 atomes de carbone, LiTFSI est l'acronyme de lithium bis(trifluorométhylsulfonyl)imide, LiBOB celui de lithium bis(oxalato)borate, et LiBETI celui de lithium bis(perfluoroéthylsulfonyl)imide.

Avantageusement, la concentration en sel conducteur ionique peut être de 1 à 50% en masse par rapport à la masse de l'électrolyte, par exemple de l'électrolyte polymère.

Selon une autre variante, l'électrolyte peut comprendre, de préférence être constitué par, un solvant organique contenant un sel conducteur ionique.

Le système électrochimique peut être notamment un accumulateur électrochimique rechargeable tel qu'un accumulateur ou une batterie au lithium, qui outre la membrane à électrolyte, telle que définie plus haut comprend une électrode positive ; une électrode négative ; et des collecteurs de courant.

Le matériau actif de l'électrode négative peut être constituée par du lithium métal ou par des matériaux d'intercalation tels que le carbone graphite (C_{gr}), ou de l'oxyde de titane lithié (Li₄Ti₅O₁₂) dans le cas des accumulateurs basés sur la technologie lithium-ion.

Le matériau actif de l'électrode positive comprend généralement, des matériaux d'intercalation du lithium tels que des oxydes lamellaires de métaux de transition lithiés, des olivines ou phosphates. A titre illustratif et non limitatif, on peut citer LiCoO₂ ; LiMn₂O₄ ; LiNiO₂ ; LiFePO₄, Li₂FeSiO₄, LiMnPO₄, LiCoPO₄ ; LiFe₂(PO₄)₃.

Les électrodes peuvent, en outre, comprendre un liant qui est généralement un polymère organique, une matière électrochimiquement active d'électrode positive ou négative, éventuellement un ou des additif(s) conducteur(s) électronique(s).

Les collecteurs de courant sont, par exemple, en cuivre pour l'électrode négative, ou en aluminium pour l'électrode positive. Les collecteurs de courant permettent la circulation des électrons, et donc la conduction électronique, dans le circuit extérieur.

L'additif conducteur électronique éventuel peut être choisi parmi les particules métalliques telles que les particules d'Ag, le graphite, le noir de carbone, les fibres de carbone, les nanofils de carbone, les nanotubes de carbone et les polymères conducteurs électroniques, et leurs mélanges.

Lors du fonctionnement d'un tel dispositif électrochimique, et en cas d'emballement thermique (par exemple, si la température de la membrane dépasse 100°C voire 150°C), la couche de sécurité (ou la matrice polymérique lorsque celle-ci joue le rôle de couche de sécurité) déborde de l'espace inter-tube, pour créer une couche isolante à la fois d'un point de vue électrique et ionique recouvrant la première extrémité des NTC 50 (figures 8a, 8b et 8c). Ce débordement peut être réversible, c'est-à-dire que lorsque la température redescend en dessous d'une température seuil, le polymère de la couche de sécurité ou de la matrice reprend sa forme initiale et retrouve ses propriétés initiales. Le débordement peut avoir lieu sur toute la deuxième surface de la membrane 100 ou sur une partie de la deuxième surface de la membrane 100, localement au niveau de l'échauffement.

### Exemples illustratifs et non limitatifs d'un mode de réalisation :

Dans cet exemple, le procédé de fabrication d'une membrane a été réalisé à partir d'un tapis de NTC de 1 cm². La hauteur des NTC est d'environ 30µm et le diamètre des NTC est de 4-5nm.

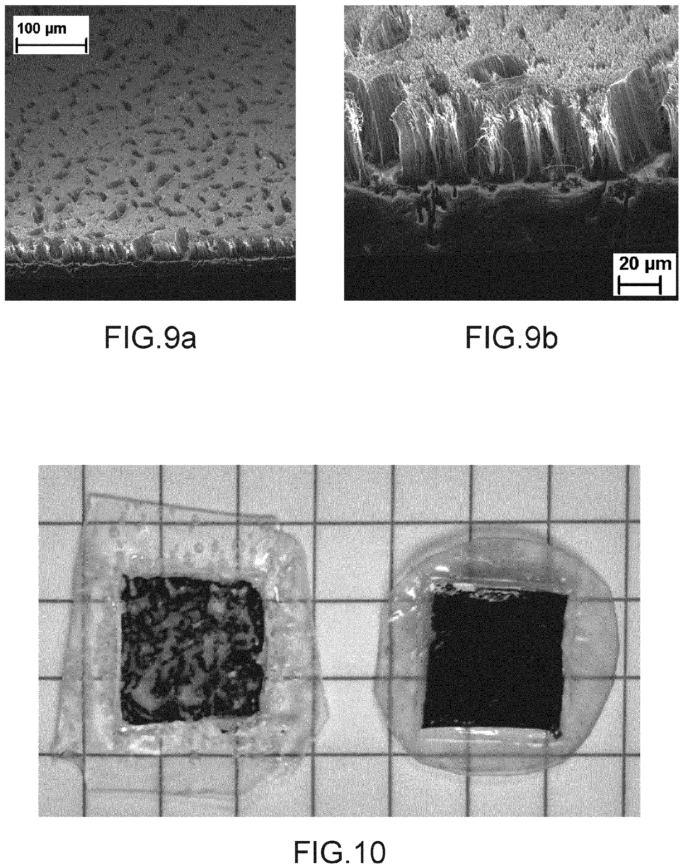

On dépose sur une plaque de verre, une solution comprenant un solvant, des méthacrylates de méthyle et un photo-initiateur. On chauffe la plaque de façon à évaporer une large fraction du solvant. Puis la solution est ensuite mise en contact avec les têtes des NTC. On réticule ensuite les précurseurs sous UV de manière à former un film de PMMA (figures 9a et 9b).

La figure 10 représente deux membranes composite NTC-polystyrène comprenant un tapis de nanotubes de carbone de 1cm². Les NTC apparaissent en noir.

La membrane à gauche de la figure 10 a été obtenue selon un procédé de l'art antérieur. On observe une perte d'alignement des NTC.

La membrane à droite de la figure 10 a été obtenue selon un mode de réalisation du procédé de l'invention. Les nanotubes de carbone sont perpendiculaires aux faces principales de la membrane et régulièrement espacés. L'alignement des NTC est conservé.

## Revendications

1. Procédé de fabrication d'une membrane à électrolyte (100) pour dispositif électrochimique comprenant les étapes suivantes :
a) fournir un substrat (10) recouvert d'un tapis de nanotubes de carbone (50), les nanotubes de carbone (50) ayant une première extrémité et une deuxième extrémité, séparées par une partie centrale, la première extrémité des nanotubes de carbone (50) étant fixée au substrat (10),
b) former une couche de maintien (110), en un premier matériau polymère, sur la deuxième extrémité des nanotubes de carbone (50), moyennant quoi la deuxième extrémité des nanotubes de carbone (50) est recouverte et maintenue par la couche de maintien (110),
c) former, entre la couche de maintien (110) et le substrat (10), une matrice polymérique (120) en un deuxième matériau polymère, de manière à enrober au moins la partie centrale des nanotubes de carbone (50),
d) lorsque le premier matériau polymère n'est pas conducteur ionique et isolant électrique, retirer la couche de maintien (110) puis recouvrir la deuxième extrémité des nanotubes de carbone (50) par un élément (140) conducteur ionique et isolant électrique,
e) retirer le substrat (10), moyennant quoi on obtient une membrane à électrolyte (100), ayant une première face principale et une deuxième face principale, les nanotubes de carbone (50) formant des canaux au sein de la membrane à électrolyte (100), les canaux étant orientés perpendiculairement à la première face principale et à la deuxième face principale, et étant de préférence étant régulièrement espacés.

2. Procédé selon la revendication 1, **caractérisé en ce que** l'étape b) est réalisée selon les étapes successives suivantes :
- déposer sur un support (20) une première solution contenant un premier solvant et le premier matériau polymère dissous ou les précurseurs du premier matériau polymère,
- positionner le support (20) sur la deuxième extrémité des nanotubes de carbone (50), de manière à ce que la deuxième solution soit en contact avec la deuxième extrémité des nanotubes de carbone (50),
- évaporer le solvant et, éventuellement, polymériser les précurseurs du premier matériau polymère.

3. Procédé selon l'une quelconque des revendications 1 à 2, **caractérisé en ce que** le premier matériau polymère est un polymère électrolyte, un poly(liquide ionique) ou un ionogel.

4. Procédé selon l'une des revendications 1 à 2, **caractérisé en ce que** l'étape d) est réalisée par greffage, sur la deuxième extrémité des nanotubes de carbone (50), d'un polymère conducteur ionique et isolant électrique, de préférence choisi parmi les poly(liquides ioniques), les polymères électrolytes et les ionogels.

5. Procédé selon l'une des revendications 1 à 4, **caractérisé en ce que** le procédé comporte une étape additionnelle entre l'étape b) et l'étape c) au cours de laquelle on forme une couche de sécurité (130) en un troisième matériau polymère sur le substrat (10), moyennant quoi la couche de sécurité (130) entoure la première extrémité des nanotubes de carbone (50), le troisième matériau étant, par exemple, en polyéthylène, en polyoléfine, en poly(acide acrylique), en polyméthacrylonitrile ou en PMMA.

6. Procédé selon l'une des revendications 1 à 5, **caractérisé en ce que** le deuxième matériau polymère est choisi parmi le PDMS, le polystyrène, les polymères époxyde, le PMMA ou en un de leurs copolymères, les polymères électrolytes, les poly(liquides ioniques), les ionogels, les polyoléfines, un poly(acide acrylique) et les polyméthacrylonitriles.

7. Membrane à électrolyte (100) pour dispositif électrochimique, ayant une première face principale (100a) et une deuxième face principale (100b), la membrane à électrolyte (100) comprenant :
- un tapis de nanotubes de carbone (50) ayant une première extrémité et une deuxième extrémité, séparées par une partie centrale, les nanotubes de carbone (50) étant disposés de manière à former des canaux orientés perpendiculairement à la première face principale (100a) et à la deuxième face principale (100b), les nanotubes de carbone (50) étant, de préférence, régulièrement espacés,
la deuxième extrémité des nanotubes de carbone (50) étant recouverte par une couche de maintien (110) en un premier polymère conducteur ionique et isolant électrique, ou par un élément conducteur (140) ionique et isolant électrique,
- une matrice polymérique (120) en un deuxième matériau polymère séparant les nanotubes de carbone les uns des autres, la matrice polymérique (120) enrobant au moins la partie centrale des nanotubes de carbone (50).

8. Membrane selon la revendication 7, **caractérisée en ce que** le premier matériau polymère est un polymère choisi parmi les poly(liquides ioniques), les polymères électrolytes et les ionogels ou **en ce que** l'élément conducteur ionique et isolant électrique est choisi parmi les poly(liquides ioniques), les polymères électrolytes, l'oxyde de propylène, les polymères anioniques et/ou les polymères multi-blocs à base de monomères des polymères précités.

9. Membrane selon l'une des revendications 7 et 8, **caractérisé en ce que** la membrane comprend, en outre, une couche de sécurité (130) en un troisième matériau polymère, en contact avec la première extrémité des nanotubes de carbone (50), le troisième matériau polymère étant choisi parmi le polyéthylène, les polyoléfines, les poly(acide acrylique), le polyméthacrylonitrile et le PMMA.

10. Membrane selon l'une des revendications 7 à 9, **caractérisée en ce que** le deuxième matériau polymère est choisi parmi le PDMS, le polystyrène, les polymères époxyde, le PMMA ou en un de leurs copolymères, les polymères électrolytes, les poly(liquides ioniques), les polymères anioniques et/ou les polymères multi-blocs à base de monomères de polymères précités, les ionogels, les polyoléfines, un poly(acide acrylique) et les polyméthacrylonitriles.

11. Membrane selon l'une quelconque des revendications 7 à 10, **caractérisé en ce que** l'élément (140) conducteur ionique et isolant électrique est greffé sur la deuxième extrémité des nanotubes de carbone (50).

12. Dispositif électrochimique, tel qu'un accumulateur au lithium, comprenant une membrane à électrolyte (100), telle que définie dans l'une quelconque des revendications 7 à 11, la membrane à électrolyte (100) étant disposée entre une première électrode (210) et une seconde électrode (220), la membrane à électrolyte (100) étant remplie par un électrolyte.

## Patentansprüche

1. Verfahren zur Herstellung einer Elektrolyt-Membran (100) für eine elektrochemische Vorrichtung, das die folgenden Schritte umfasst:
a) Bereitstellen eines Substrats (10), das mit einer Matte aus Kohlenstoff-Nanoröhrchen (50) bedeckt ist, wobei die Kohlenstoff-Nanoröhrchen (50) ein erstes Ende und ein zweites Ende haben, die durch einen zentralen Teil getrennt sind, wobei das erste Ende der Kohlenstoff-Nanoröhrchen (50) am Substrat (10) befestigt ist,
b) Bilden einer Halteschicht (110) aus einem ersten Polymermaterial auf dem zweiten Ende der Kohlenstoff-Nanoröhrchen (50), wodurch das zweite Ende der Kohlenstoff-Nanoröhrchen (50) bedeckt und durch die Halteschicht (110) gehalten wird,
c) Bilden, zwischen der Halteschicht (110) und dem Substrat (10), einer Polymermatrix (120) aus einem zweiten Polymermaterial, so dass mindestens der zentrale Teil der Kohlenstoff-Nanoröhrchen (50) ummantelt wird,
d) wenn das erste Polymermaterial nicht ionenleitend und elektrisch isolierend ist, Entfernen der Halteschicht (110), dann Bedecken des zweiten Endes der Kohlenstoff-Nanoröhrchen (50) mit einem ionenleitenden und elektrisch isolierenden Element (140),
e) Entfernen des Substrats (10), wodurch man eine Elektrolyt-Membran (100) mit einer ersten Hauptfläche und einer zweiten Hauptfläche erhält, wobei die Kohlenstoff-Nanoröhrchen (50) Kanäle innerhalb der Elektrolyt-Membran (100) bilden, wobei die Kanäle senkrecht zur ersten Hauptfläche und zur zweiten Hauptfläche ausgerichtet und vorzugsweise gleichmäßig beabstandet sind.

2. Verfahren nach Anspruch 1, **dadurch gekennzeichnet, dass** der Schritt b) gemäß den folgenden aufeinanderfolgenden Schritten durchgeführt wird:
- Aufbringen einer ersten Lösung auf einem Träger (20), die ein erstes Lösungsmittel und das erste gelöste Polymermaterial oder die Vorläufer des ersten Polymermaterials enthält,
- Positionieren des Trägers (20) auf dem zweiten Ende der Kohlenstoff-Nanoröhrchen (50), so dass die zweite Lösung mit dem zweiten Ende der Kohlenstoff-Nanoröhrchen (50) im Kontakt ist,
- Verdampfen des Lösungsmittels und eventuell Polymerisieren der Vorläufer des ersten Polymermaterials.

3. Verfahren nach einem der Ansprüche 1 bis 2, **dadurch gekennzeichnet, dass** das erste Polymermaterial ein Elektrolytpolymer, eine (poly)ionische Flüssigkeit oder ein lonengel ist.

4. Verfahren nach einem der Ansprüche 1 bis 2, **dadurch gekennzeichnet, dass** der Schritt d) durch Pfropfen eines ionenleitenden und elektrisch isolierenden Polymers, das vorzugsweise aus den (poly)ionischen Flüssigkeiten, den Elektrolytpolymeren und den lonengelen ausgewählt ist, auf das zweite Ende der Kohlenstoff-Nanoröhrchen (50) durchgeführt wird.

5. Verfahren nach einem der Ansprüche 1 bis 4, **dadurch gekennzeichnet, dass** das Verfahren einen zusätzlichen Schritt zwischen dem Schritt b) und dem Schritt c) aufweist, bei dem eine Sicherheitsschicht (130) aus einem dritten Polymermaterial auf dem Substrat (10) gebildet wird, wodurch die Sicherheitsschicht (130) das erste Ende der Kohlenstoff-Nanoröhrchen (50) umgibt, wobei das dritte Material beispielsweise aus Polyethylen, aus Polyolefin, aus Poly(Acrylsäure), aus Polymethacrylnitril oder aus PMMA ist.

6. Verfahren nach einem der Ansprüche 1 bis 5, **dadurch gekennzeichnet, dass** das zweite Polymermaterial aus PDMS, Polystyrol, den Epoxydpolymeren, PMMA oder aus einem ihrer Copolymere, den Elektrolytpolymeren, den poly(ionischen Flüssigkeiten), den lonengelen, den Polyolefinen, einer Poly(Acrylsäure) und den Polymethacrylnitrilen ausgewählt ist.

7. Elektrolyt-Membran (100) für eine elektrochemische Vorrichtung mit einer ersten Hauptfläche (100a) und einer zweiten Hauptfläche (100b), wobei die Elektrolyt-Membran (100) umfasst:
- eine Matte aus Kohlenstoff-Nanoröhrchen (50) mit einem ersten Ende und einem zweiten Ende, die durch einen zentralen Teil getrennt sind, wobei die Kohlenstoff-Nanoröhrchen (50) derart angeordnet sind, dass Kanäle gebildet werden, die senkrecht zur ersten Hauptfläche (100a) und zur zweiten Hauptfläche (100b) angeordnet sind, wobei die Kohlenstoff-Nanoröhrchen (50) vorzugsweise gleichmäßig beabstandet sind,
wobei das zweite Ende der Kohlenstoff-Nanoröhrchen (50) mit einer Halteschicht (110) aus einem ersten ionenleitenden und elektrisch isolierenden Polymer oder mit einem ionenleitenden und elektrisch isolierenden Element (140) bedeckt ist,
- eine Polymermatrix (120) aus einem zweiten Polymermaterial, die die Kohlenstoff-Nanoröhrchen voneinander trennt, wobei die Polymermatrix (120) mindestens den zentralen Teil der Kohlenstoff-Nanoröhrchen (50) ummantelt.

8. Membran nach Anspruch 7, **dadurch gekennzeichnet, dass** das erste Polymermaterial ein Polymer ist, das aus den poly(ionischen) Flüssigkeiten, den Elektrolytpolymeren und den lonengelen ausgewählt ist oder dass das ionenleitende und elektrisch isolierende Element aus den poly(ionischen) Flüssigkeiten, den Elektrolytpolymeren, Propylenoxid, den anionischen Polymeren und/oder den Multiblockpolymeren auf der Basis von Monomeren der vorgenannten Polymere ausgewählt ist.

9. Membran nach einem der Ansprüche 7 und 8, **dadurch gekennzeichnet, dass** die Membran ferner eine Sicherheitsschicht (130) aus einem dritten Polymermaterial im Kontakt mit dem ersten Ende der Kohlenstoff-Nanoröhrchen (50) umfasst, wobei das dritte Polymermaterial aus Polyethylen, den Polyolefinen, den Poly(Acrylsäuren), Polymethacrylnitril und PMMA ausgewählt ist.

10. Membran nach einem der Ansprüche 7 bis 9, **dadurch gekennzeichnet, dass** das zweite Polymermaterial aus PDMS, Polystyrol, den Epoxydpolymeren, PMMA oder aus einem ihrer Copolymere, den Elektrolytpolymeren, den poly(ionischen) Flüssigkeiten, den anionischen Polymeren und/oder den Multiblockpolymeren auf der Basis von Monomeren vorgenannter Polymere, den lonengelen, den Polyolefinen, einer Poly(Acrylsäure) und den Polymethacrylnitrilen ausgewählt ist.

11. Membran nach einem der Ansprüche 7 bis 10, **dadurch gekennzeichnet, dass** das ionenleitende und elektrisch isolierende Element (140) auf das zweite Ende der Kohlenstoff-Nanoröhrchen (50) gepfropft wird.

12. Elektrochemische Vorrichtung wie ein Lithiumakkumulator, umfassend eine Elektrolyt-Membran (100) nach einem der Ansprüche 7 bis 11, wobei die Elektrolyt-Membran (100) zwischen einer ersten Elektrode (210) und einer zweiten Elektrode (220) angeordnet ist, wobei die Elektrolyt-Membran (100) mit einem Elektrolyten gefüllt ist.

## Claims

1. Method for manufacturing an electrolyte membrane (100) for an electrochemical device comprising the following steps:
a) providing a substrate (10) covered with a mat of carbon nanotubes (50), the carbon nanotubes (50) having a first end and a second end, separated by a central part, the first end of the carbon nanotubes (50) being fixed to the substrate (10),
b) forming a retaining layer (110), in a first polymer material, on the second end of the carbon nanotubes (50), whereby the second end of the carbon nanotubes (50) is covered and held by the retaining layer (110),
c) forming, between the retaining layer (110) and the substrate (10), a polymer matrix (120) in a second polymer material, so as to coat at least the central part of the carbon nanotubes (50),
d) when the first polymer material is not ionic conductive and electrically insulating, removing the retaining layer (110) then covering the second end of the carbon nanotubes (50) with an ionic conductive and electrically insulating element (140),
e) removing the substrate (10), whereby an electrolyte membrane (100) is obtained, having a first main face and a second main face, the carbon nanotubes (50) forming channels within the electrolyte membrane (100), the channels being oriented perpendicularly to the first main face and to the second main face, and preferably being regularly spaced.

2. Method according to claim 1, **characterised in that** step b) is carried out according to the following successive steps:
- depositing on a support (20) a first solution containing a first solvent and the dissolved first polymer material or the precursors of the first polymer material,
- positioning the support (20) on the second end of the carbon nanotubes (50), such that the second solution is in contact with the second end of the carbon nanotubes (50),
- evaporating the solvent and, optionally, polymerising the precursors of the first polymer material.

3. Method according to any one of claims 1 to 2, **characterised in that** the first polymer material is an electrolyte polymer, a poly(ionic liquid) or an ionogel.

4. Method according to one of claims 1 to 2, **characterised in that** step d) is carried out by grafting, on the second end of the carbon nanotubes (50), an ionic conductive and electrically insulating polymer, preferably selected from poly(ionic liquids), electrolyte polymers and ionogels.

5. Method according to one of claims 1 to 4, **characterised in that** the method includes an additional step between step b) and step c) during which a safety layer (130) in a third polymer material is formed on the substrate (10), whereby the safety layer (130) surrounds the first end of the carbon nanotubes (50), the third material being, for example, in polyethylene, in polyolefin, in poly(acrylic acid), in polymethacrylonitrile or in PMMA.

6. Method according to one of claims 1 to 5, **characterised in that** the second polymer material is selected from PDMS, polystyrene, epoxy polymers, PMMA or one of their copolymers, electrolyte polymers, poly(ionic liquids), ionogels, polyolefins, a poly(acrylic acid) and polymethacrylonitriles.

7. Electrolyte membrane (100) for an electrochemical device, having a first main face (100a) and a second main face (100b), the electrolyte membrane (100) comprising:
a mat of carbon nanotubes (50) having a first and a second end, separated by a central part, the carbon nanotubes (50) being disposed so as to form channels oriented perpendicularly to the first main face (100a) and to the second main face (100b), the carbon nanotubes (50) being preferably regularly spaced,
the second end of the carbon nanotubes (50) being covered by a retaining layer (110) in a first ionic conductive and electrically insulating polymer, or by an ionic conductive and electrically insulating element (140),
a polymer matrix (120) in a second polymer material separating the carbon nanotubes from each other, the polymer matrix (120) coating at least the central part of the carbon nanotubes (50).

8. Membrane according to claim 7, **characterised in that** the first polymer material is a polymer selected from poly(ionic liquids), electrolyte polymers and ionogels or **in that** the ionic conductive and electrically insulating element is selected from poly(ionic liquids), electrolyte polymers, propylene oxide, anionic polymers and/or multi-block polymers based on monomers of the aforementioned polymers.

9. Membrane according to one of claims 7 and 8, **characterised in that** the membrane further comprises a safety layer (130) in a third polymer material, in contact with the first end of the carbon nanotubes (50), the third polymer material being selected from polyethylene, polyolefins, poly(acrylic acid), polymethacrylonitrile and PMMA.

10. Membrane according to one of claims 7 to 9, **characterised in that** the second polymer material is selected from PDMS, polystyrene, epoxy polymers, PMMA or one of their copolymers, electrolyte polymers, poly(ionic liquids), anionic polymers and/or multi-block polymers based on monomers of the aforementioned polymers, ionogels, polyolefins, a poly(acrylic acid) and polymethacrylonitriles.

11. Membrane according to any one of claims 7 to 10, **characterised in that** the ionic conductive and electrically insulating element (140) is grafted on the second end of the carbon nanotubes (50).

12. Electrochemical device, such as a lithium battery, comprising an electrolyte membrane (100), as defined in any one of claims 7 to 11, the electrolyte membrane (100) being disposed between a first electrode (210) and a second electrode (220), the electrolyte membrane (100) being filled with an electrolyte.
